# EUROPEAN PATENT APPLICATION

(11) **EP 4 494 990 A2**
(43) Date of publication of application: **22.01.2025**
(21) Application number: 24218532.0
(22) Date of filing: 25.12.2018
(51) Int. Cl.: B62K 19/06

(54) **PIPE FRAME STRENGTHENING STRUCTURE**

(30) Priority: 23.03.2018 JP 2018056725
(62) Divisional of application: 18911182.6
(71) Applicant: HONDA MOTOR CO., LTD., Minato-ku Tokyo 107-8556 (JP)
(72) Inventor: NAGAYAMA, Masashi, Wako-shi, Saitama, 351-0193 (JP); OISHI, Kenichi, Wako-shi, Saitama, 351-0193 (JP)
(74) Representative: Kiwit, Benedikt

(57) **Abstract**

There is provided a pipe frame strengthening structure that can increase the rigidity of a curved portion of a pipe frame by a simple structure.

In a pipe frame strengthening structure applied to a pipe material (MF) having a circular cross section configuring a body frame (F), a through pipe (50) is arranged at a curved portion of the pipe material (MF), the through pipe (50) penetrating the pipe material (MF) in the radial direction. The through pipe (50) can be arranged at a maximum curvature position (B1) where the curvature becomes largest in the curved portion (A1) of the pipe material (MF). The through pipes (50) are arranged at two positions apart from each other across a maximum curvature position (B2) where the curvature becomes largest in a curved portion (A2) of the pipe material (MF). The through pipe (50) can be directed to cross an axis (C1, C2) of the pipe material (MF) and can be welded to the pipe material (MF).

## Description

### [Technical Field]

The present invention relates to a pipe frame strengthening structure, and more particularly to a pipe frame strengthening structure applied to a curved portion of a pipe frame.

### [Background Art]

Heretofore, there has been known to configure a body frame of a saddle riding vehicle and the like by combination of round pipe materials (steel pipe materials) formed of iron and the like.

Patent Literature 1 discloses a body frame of a scooter type motorcycle where the low floor is arranged between a steering handlebar and the seat, in which the head pipe pivotally supporting a steering system of a front wheel, the under frame being connected to the head pipe and passing the lower portion of a low floor and the rear frame supporting the lower portion of a seat are configured of round pipe materials.

### [Patent Literature]

Patent Document 1: JP 3974405 B

### [Summary of Invention]

### [Problem to be solved by Invention]

Here, although a round pipe material formed of iron and the like is a raw material easy in bending work and welding work and low in the cost, since the thickness and the outside diameter are constant, there is a case of subjecting a portion where higher rigidity is required in being assembled as a body frame to reinforcement work by a gusset, patch, and the like. However, in order to execute such reinforcement work, a gusset and patch for exclusive use matching the shape of each portion are required which directly results in increase of the number of piece of components and the production man-hour. In this regard, it is probable that the production man-hour of the pipe frame is substantially reduced when the rigidity of the curved portion of the pipe material can be increased without using a gusset and the like for exclusive use in particular.

The object of the present invention is to provide a pipe frame strengthening structure that can solve the problem of the prior art described above and can increase the rigidity of the curved portion of the pipe frame by a simple structure.

### [Solution to Problem]

To achieve the afore-mentioned object, the present invention has a first feature in that a pipe frame strengthening structure applied to a pipe material (MF) has a circular cross section configuring a body frame (F), wherein a through pipe (50) is arranged at a curved portion of the pipe material (MF), the through pipe (50) penetrating the pipe material (MF) in the radial direction.

To achieve the afore-mentioned object, the present invention has a second feature in that the pipe material (MF) includes a curved portion (A1), and the through pipe (50) is arranged at a maximum curvature position (B 1) where curvature becomes largest in the curved portion (A1).

To achieve the afore-mentioned object, the present invention has a third feature in that the pipe material (MF) includes a curved portion (A2), and the through pipes (50) are arranged at two positions apart from each other across a maximum curvature position (B2) where curvature of the curved portion (A2) becomes largest.

To achieve the afore-mentioned object, the present invention has a fourth feature in that the through pipe (50) is arranged to be directed to a direction orthogonal to the bending direction of the curved portion (A1, A2).

To achieve the afore-mentioned object, the present invention has a fifth feature in that the through pipe (50) is arranged to cross an axis (C1, C2) of the pipe material (MF).

To achieve the afore-mentioned object, the present invention has a sixth feature in that the diameter (ϕ1) of the through pipe (50) is set to be 1/3 to 1/4 of the diameter (ϕ2) of the pipe material (MF), and the through pipe (50) is made to pass through a through hole (33c) formed in the pipe material (MF) and is thereafter fixed by welding.

To achieve the afore-mentioned object, the present invention has a seventh feature in that the body frame (F) includes a head pipe (30) and a main frame (MF), the head pipe (30) pivotally supporting a steering mechanism of a front wheel (WF) of a saddle riding vehicle (1) in a swingable manner, the main frame (MF) extending vehicle body downward from the head pipe (30) and thereafter extending vehicle body rearward, and the through pipe (50) is arranged in the curved portion (A1, A2) that is formed in the main frame (MF).

To achieve the afore-mentioned object, the present invention has an eighth feature in that the main frames (MF) are arranged by a pair in the left and right in the vehicle width direction.

To achieve the afore-mentioned object, the present invention has a ninth feature in that the saddle riding vehicle (1) is a scooter type motorcycle where a low floor (11) is arranged between a steering handlebar (5) and a seat (13), a fuel tank (70) is disposed between a pair of left and right under frames (34) that configure a part of the main frame (MF) and are directed in the vehicle longitudinal direction, and a front end portion (70a) of the fuel tank (70) is positioned vehicle body below the head pipe (30).

To achieve the afore-mentioned object, the present invention has a tenth feature in that a curved portion (A2) is formed in the main frame (MF) that extends downward from the head pipe (30), the curved portion (A2) curving vehicle body rearward on the vehicle body lower side and continuing to the under frame (34), and a cross pipe (35) is welded at a position between the through pipes (50) of two positions arranged in the curved portion (A2), the cross pipe (35) being extended vehicle body forward and connecting the left and right main frames (MF) to each other.

### [Effects of Invention]

According to the first feature of the present invention, a pipe frame strengthening structure applied to a pipe material (MF) has a circular cross section configuring a body frame (F), wherein a through pipe (50) is arranged at a curved portion of the pipe material (MF), the through pipe (50) penetrating the pipe material (MF) in the radial direction. Therefore, the cross-sectional shape of the pipe material becomes hardly deformable when a bending stress is applied to the pipe material, and thereby the strength against the bending stress can be increased. Thus, since the rigidity of the pipe material can be increased by a simple structure of arranging a through pipe, the production man-hour and the production cost can be reduced without using a gusset and patch for exclusive use. Further, the degree of freedom of the layout of the body frame can be improved by increase of the rigidity of the curved portion, and weight reduction can be achieved by eliminating the gusset and the like.

According to the second feature of the present invention, the pipe material (MF) includes a curved portion (A1), and the through pipe (50) is arranged at a maximum curvature position (B1) where curvature becomes largest in the curved portion (A1). Therefore, the rigidity of the curved portion can be increased by arranging one piece of the through pipe in the vicinity of the apex of the bent portion particularly when the bending angle of the curved portion is an obtuse angle, and so on.

According to the third feature of the present invention, the pipe material (MF) includes a curved portion (A2), and the through pipes (50) are arranged at two positions apart from each other across a maximum curvature position (B2) where curvature of the curved portion (A2) becomes largest. Therefore, the rigidity of the curved portion can be increased by arranging two pieces of the through pipe to sandwich the apex of the bent portion particularly when the bending angle of the overall curved portion is an obtuse angle, and so on.

According to the fourth feature of the present invention, the through pipe (50) is arranged to be directed to a direction orthogonal to the bending direction of the curved portion (A1, A2). Therefore, the strength in applying a bending stress which is along the bending direction of the curved portion can be increased compared to a case of arranging a through pipe along the bending direction. To be more specific, when a bending stress along the bending direction of the curved portion is applied, a compression stress is applied to the pipe wall surface positioned on the inside of the bending direction out of two surfaces opposing each other across the pipe axis, and a tensile stress is applied to the pipe wall surface positioned on the outside of the bending direction. By arranging a through pipe between two surfaces farthest from these two surfaces to which the stress is applied, the strength against the bending stress comes to be further increased.

According to the fifth feature of the present invention, the through pipe (50) is arranged to cross an axis (C1, C2) of the pipe material (MF). Therefore, two farthest surfaces opposing each other across the axis of the pipe material come to be connected to each other by the through pipe, and thereby the effect of improving the rigidity of the pipe material is enhanced.

According to the sixth feature of the present invention, the diameter (ϕ1) of the through pipe (50) is set to be 1/3 to 1/4 of the diameter (ϕ2) of the pipe material (MF), and the through pipe (50) is made to pass through a through hole (33c) formed in the pipe material (MF) and is thereafter fixed by welding. Therefore, by making the diameter of the through pipe comparatively small, the effect exerted to the welding portion by the bending stress applied to the pipe material can be reduced and the through pipe can be fixed to the pipe material with less welding work, and therefore the production man-hour can be reduced. Further, by welding the through pipe to the pipe material, the effect of improving the rigidity by the through pipe can be secured sufficiently.

According to the seventh feature of the present invention, the body frame (F) includes a head pipe (30) and a main frame (MF), the head pipe (30) pivotally supporting a steering mechanism of a front wheel (WF) of a saddle riding vehicle (1) in a swingable manner, the main frame (MF) extending vehicle body downward from the head pipe (30) and thereafter extending vehicle body rearward, and the through pipe (50) is arranged in the curved portion (A1, A2) that is formed in the main frame (MF). Therefore, the rigidity of the main frame supporting the vehicle body at a position closer to the front of the body frame of the saddle riding vehicle can be increased.

According to the eighth feature of the present invention, the main frames (MF) are arranged by a pair in the left and right in the vehicle width direction. Therefore, by increasing the rigidity of a pair of the left and right main frames, the head pipe and the rear frame on the vehicle body rear side can be supported only by the main frame of the left and right. Thus, disposal of the components such as the fuel tank is allowed effectively utilizing the space between the left and right main frames.

According to the ninth feature of the present invention, the saddle riding vehicle (1) is a scooter type motorcycle where a low floor (11) is arranged between a steering handlebar (5) and a seat (13), a fuel tank (70) is disposed between a pair of left and right under frames (34) that configure a part of the main frame (MF) and are directed in the vehicle longitudinal direction, and a front end portion (70a) of the fuel tank (70) is positioned vehicle body below the head pipe (30). Therefore, the reinforcement member and the like for increasing the rigidity becomes unnecessary between the left and right under frames, and thereby it is allowed to dispose the fuel tank disposed in the lower portion of the low floor of the scooter type motorcycle at a position close to the front of the vehicle body and to increase the front wheel load.

According to the tenth feature of the present invention, a curved portion (A2) is formed in the main frame (MF) that extends downward from the head pipe (30), the curved portion (A2) curving vehicle body rearward on the vehicle body lower side and continuing to the under frame (34), and a cross pipe (35) is welded at a position between the through pipes (50) of two positions arranged in the curved portion (A2), the cross pipe (35) being extended vehicle body forward and connecting the left and right main frames (MF) to each other. Therefore, the number of piece of the components and the production man-hour can be reduced by directly welding the cross pipe to the curved portion utilizing a portion where the rigidity of the curved portion is increased by the through pipe, the cross pipe holding other auxiliary device group and protecting the fuel tank against the impact from the front.

### [Brief Description of Drawings]

FIG. 1 is a left side view of a motorcycle incorporating therein a pipe frame strengthening structure according to an embodiment of the present invention.
FIG. 2 is a front view of the motorcycle.
FIG. 3 is a perspective view of the body frame of the motorcycle.
FIG. 4 is a left side view of the body frame.
FIG. 5 is a front view of the body frame.
FIG. 6 is a partially enlarged perspective view of the body frame.
FIG. 7 is an enlarged perspective view of the second curved portion between the front frame and the under frame.
FIG. 8 is an enlarged side view of the second curved portion.
FIG. 9 is a cross-sectional view taken along the line IX-IX of FIG. 7.
FIG. 10 is a cross-sectional view taken along the line X-X of FIG. 9.

### [Description of Embodiments]

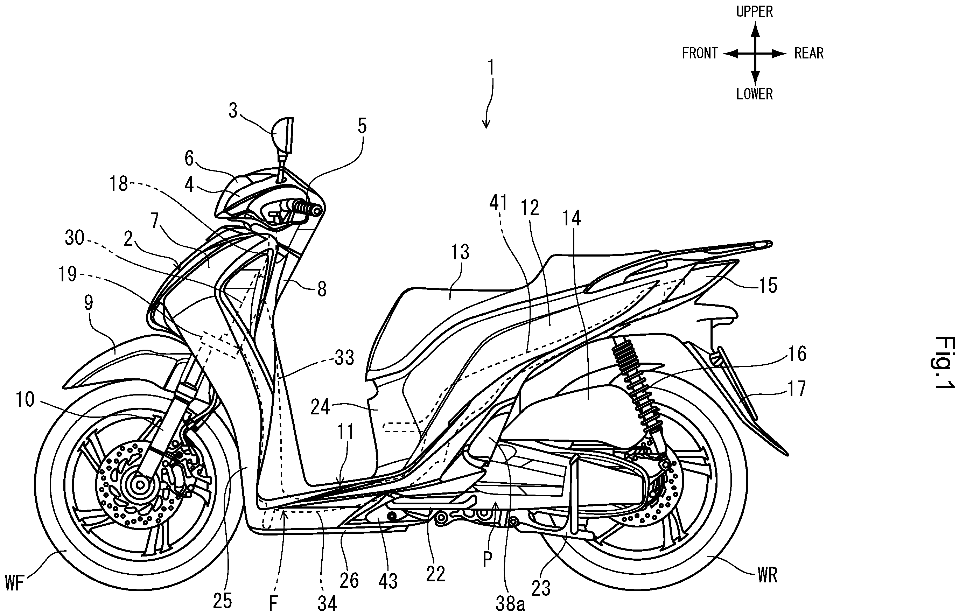

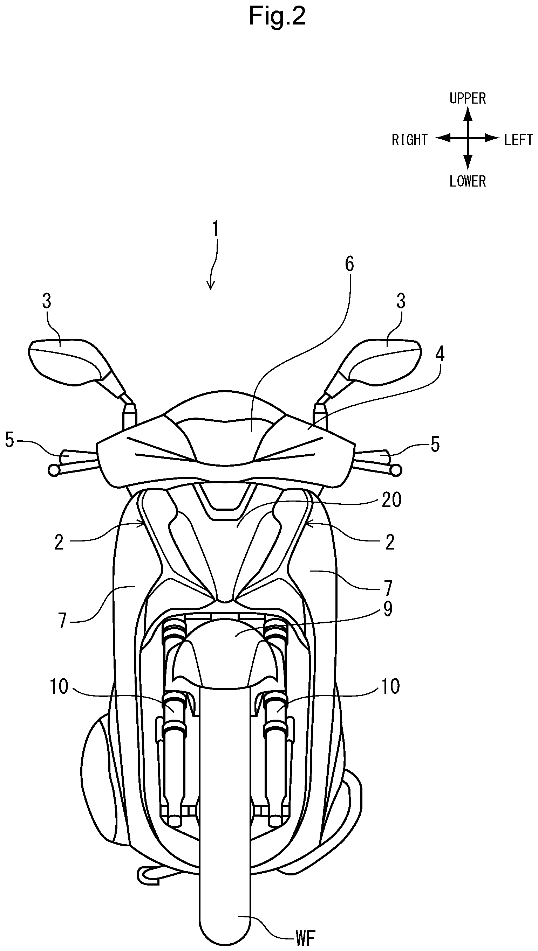

Hereinafter, preferred embodiments of the present invention will be explained in detail referring to the drawings. FIG. 1 is a left side view of a motorcycle 1 to which a pipe frame strengthening structure according to a preferred embodiment of the present invention is applied. Also, FIG. 2 is a front view of the motorcycle 1. The motorcycle 1 is a scooter type saddle riding vehicle where a low floor 11 is arranged between a steering handlebar 5 and a seat 13, the feet of a rider being placed on the low floor 11. At the front end of a body frame F, a head pipe 30 is arranged, the head pipe 30 pivotally supporting a steering stem 18 in a rotatable manner. A bottom bridge 19 is fixed to the lower end portion of the steering stem 18, the bottom bridge 19 supporting front forks 10 that pivotally support a front wheel WF in a rotatable manner, and the steering handlebar 5 is fixed to the upper end portion which is another end portion of the steering stem 18, the steering handlebar 5 extending in the vehicle width direction. The front and rear of the steering handlebar 5 are covered by a head light cover 4 that supports a head light 6 and a pair of left and right rearview mirrors 3.

On both sides of a center cowl 20 that is disposed below the head light cover 4, light devices 2 are disposed, the light devices 2 being configured of position lights and blinker lights in an integral manner. On the outside in the vehicle width direction of the light devices 2, a pair of left and light front side covers 7 are disposed. An under side cover 25 extends to below the low floor 11 and continues to an under cowl 26 in the center in the vehicle width direction, the under side cover 25 continuing to the lower portion of the front side cover 7. On the vehicle body rear side of the front side covers 7, floor panels 8 are disposed, the floor panels 8 opposing the leg portion of the occupant.

A pair of left and right front frames 33 joined to the rear surface of the head pipe 30 extend generally vehicle body downward, thereafter curve at a steep angle to the vehicle body rear side, and continue to under frames 34. To the rear of the under frames 34, a pair of left and right rear frames 41 are connected, the rear frames 41 being covered by rear cowls 12. To the left side in the vehicle width direction of the under frame 34, a bracket 43 is attached, the bracket 43 supporting a side stand 22. Above the rear of the side stand 22, a tandem step 38a is disposed, the tandem step 38a being capable of being folded and stored to the vehicle body side.

The area below the seat 13 is covered by a seat panel 24. To a position of the rear end of the under frame 34, a unit swing type power unit P is pivotally supported in a swingable manner, an engine and a transmission being integrated to the power unit P. The rear end portion of the power unit P is suspended from the rear frame 41 by a rear cushion 16, the power unit P pivotally supporting a rear wheel WR as a driving wheel in a rotatable manner. Also, an air cleaner box 14 is attached to the upper portion of the power unit P, and a main stand 23 is pivotally supported by the lower portion which is another portion of the power unit P in a swingable manner. Tail light devices 15 are disposed at the rear end portion of the rear cowls 12, a tail light and a blinker light being integrated to configure the tail light device 15, and a rear fender 17 is fixed to the lower portion of the tail light devices 15.

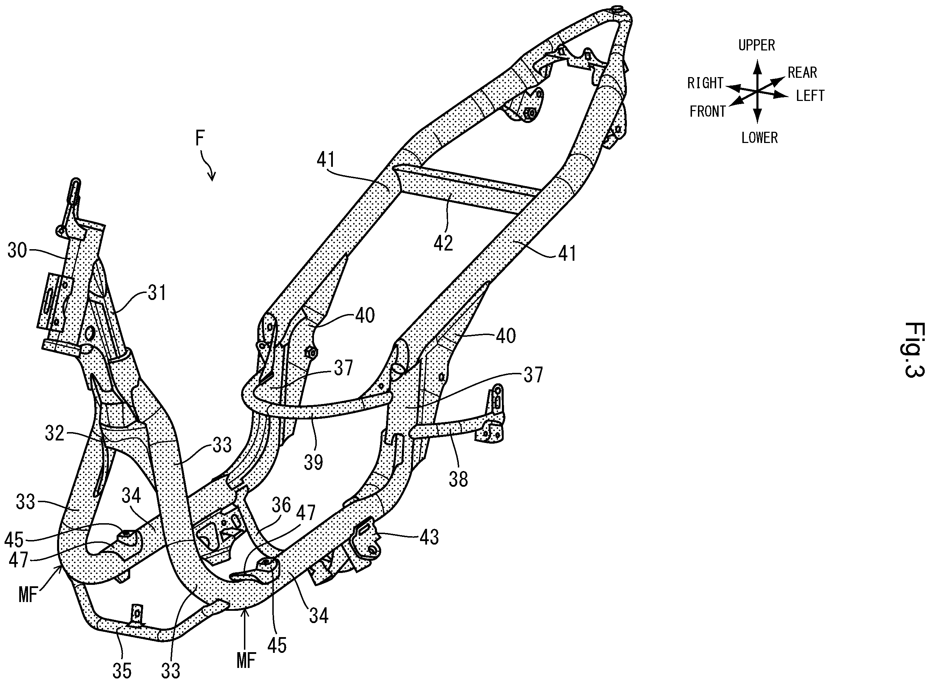

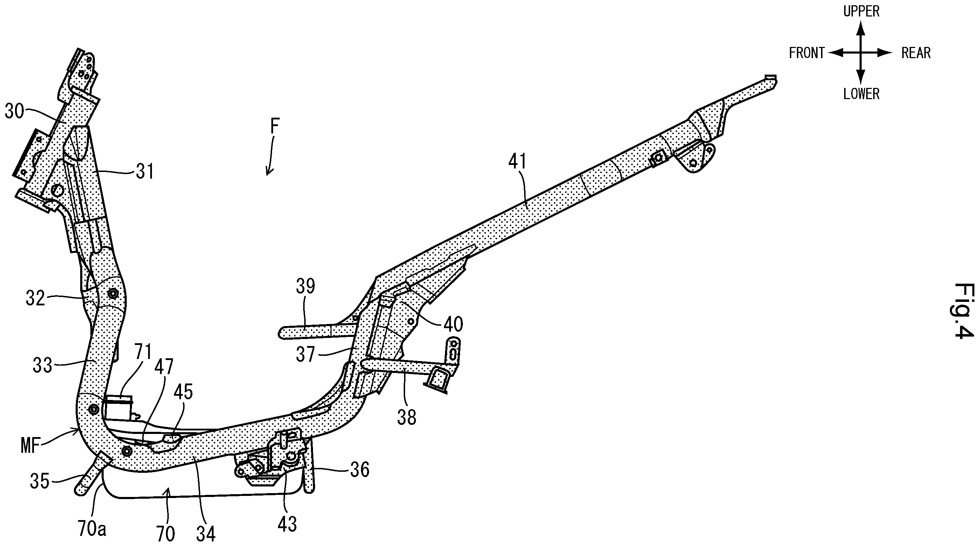

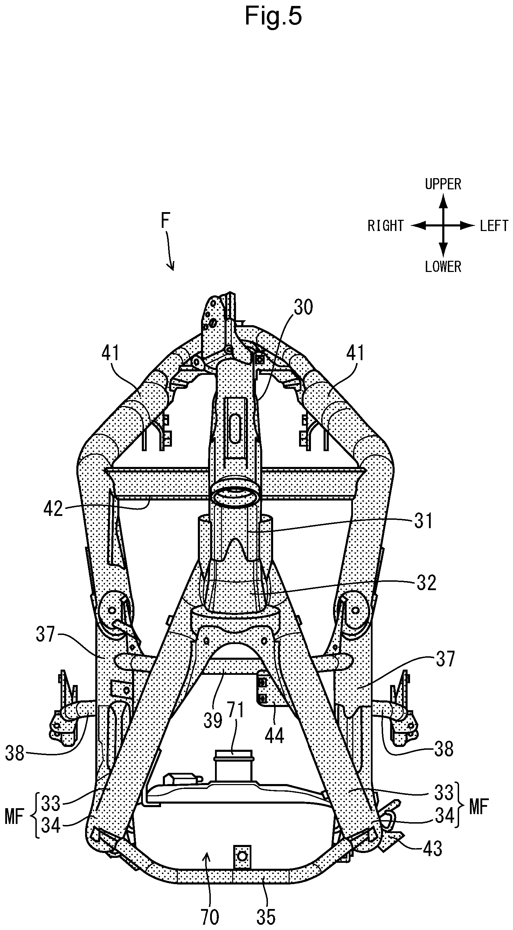

FIG. 3 is a perspective view of the body frame F of the motorcycle 1. Also, FIG. 4 is a left side view of the body frame F, and FIG. 5 is a front view of the same. In FIGs. 4 and 5, a state in which a fuel tank 70 is attached is shown. A center pipe 31 is welded to the rear surface of the head pipe 30, the center pipe 31 extending downward to the rear, and a pair of left and right main frames MF are welded to both sides in the vehicle width direction of the center pipe 31. The main frame MF is configured to include the front frame 33 and the under frame 34 by subjecting a single round pipe material to bending work, the front frame 33 extending vehicle body downward to the front in the lower portion of the center pipe 31, the under frame 34 extending vehicle body upward to the rear from the lower portion of the front frame 33. Between the lower portion of the center pipe 31 and the inside surfaces in the vehicle width direction of the front frames 33, a gusset 32 is welded, the gusset 32 being for increasing mutually joining rigidity.

Between the left and right main frames MF, a curved first cross pipe 35 and a curved second cross pipe 36 are arranged, the first cross pipe 35 connecting the left and right main frames MF to each other in front of the fuel tank 70, the second cross pipe 36 connecting the left and right main frames MF to each other behind the fuel tank 70. A fuel tank support stay 47 is welded to a position close to the front of the under frame 34, the fuel tank support stay 47 supporting the fuel tank 70, and a low floor support boss 45 is arranged on the upper surface of the fuel tank support stay 47, the low floor support boss 45 supporting the vehicle body front side of the low floor 11. The bracket 43 of the side stand 22 is welded to the under frame 34 on the left side in the vehicle width direction.

Standing portions 37 continue to the rear portions of the under frames 34, the standing portions 37 standing vehicle body upward, and a pair of the left and right rear frames 41 are connected to the upper end portions of the standing portions 37, the rear frame 41 being formed of a round pipe material that extends linearly vehicle body upward to the rear. A gusset 40 is welded between the standing portion 37 and the rear frame 41, the gusset 40 being generally in a triangle shape in the vehicle body side view. A support pipe 38 is welded to the outside in the vehicle width direction of the standing portion 37, the support pipe 38 supporting the tandem step 38a. Also, a third cross pipe 39 is disposed in the front surface portions of the standing portions 37, the third cross pipe 39 forming a curved shape projecting vehicle body forward and connecting the left and right standing portions 37 to each other, and a fourth cross pipe 42 is disposed between the left and right rear frames 41, the fourth cross pipe 42 being formed of an angular pipe material.

A front end portion 70a of the fuel tank 70 is positioned below the center pipe 31 that is welded to the rear surface side of the head pipe 30, the fuel tank 70 being disposed close to the vehicle body front. Also, an oil feed pipe 71 is positioned below the gusset 32 that is in the center in the vehicle width direction, the oil feed pipe 71 being arranged on the upper surface of the fuel tank 70.

With reference to FIG. 5, the first cross pipe 35 protects the front and bottom of the fuel tank and functions also as a support stay for various auxiliary device group, the first cross pipe 35 being arranged in front of the fuel tank 70. A stay 44 is arranged on the inner side of the front frame 33 on the left side in the vehicle width direction, the stay 44 supporting the lateral side of an extension pipe (not illustrated) that is connected to the upper portion of the oil feed pipe 71.

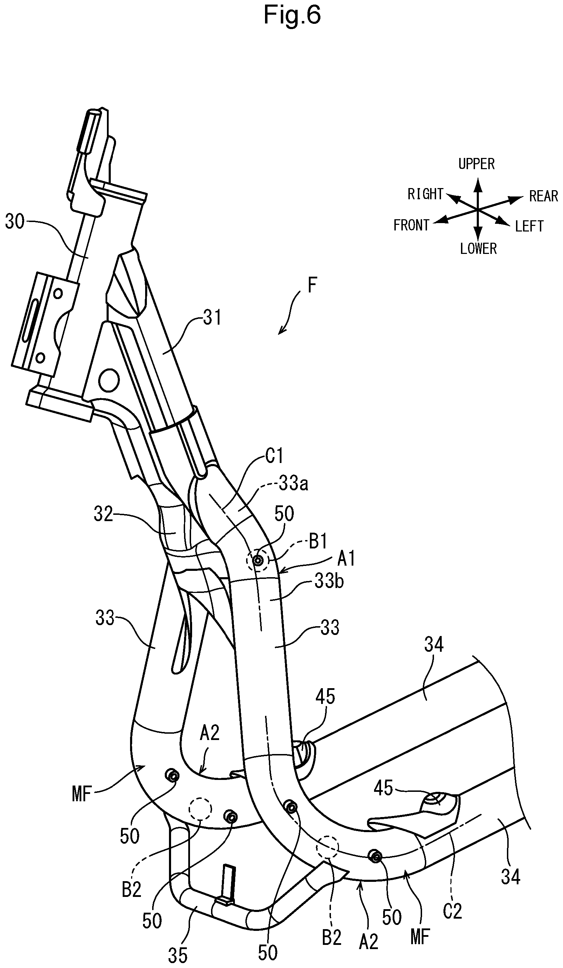

FIG. 6 is a partially enlarged perspective view of the body frame F. The main frame MF is configured to include the front frame 33 and the under frame 34 by subjecting a steel pipe material having a circular cross section to plural bending works, the front frame 33 extending vehicle body downward to the front from the lower portion of the center pipe 31, the under frame 34 extending vehicle body upward to the rear from the lower portion of the front frame 33.

In the front frame 33, a first curved portion A1 is arranged, the first curved portion A1 being formed by bending work between an upper portion 33a and a lower portion 33b, the upper portion 33a extending vehicle body downward to the rear from below the center pipe 31, the lower portion 33b continuing to the lower portion of the upper portion 33a and extending vehicle body downward to the front. According to the present embodiment, the rigidity of the first curved portion A1 is increased by arranging a through pipe 50 at a position where the curvature becomes largest namely a maximum curvature position B1 where the curvature of an axis C1 of the front frame 33 becomes largest between the upper portion 33a and the lower portion 33b, the through pipe 50 penetrating the front frame 33. Here, when linear portions of the axis C1 sandwiching the first curved portion A1 are focused, the bending angle of the first curved portion A1 is an obtuse angle greater than 90 degrees.

Also, a second curved portion A2 is arranged between the front frame 33 and the under frame 34, the second curved portion A2 being formed by bending work. With regard to the second curved portion A2, the rigidity of the second curved portion A2 is increased by arranging the through pipes 50 at two positions apart from each other across a position where the curvature becomes largest namely a maximum curvature position B2 where the curvature of an axis C2 of the main frame MF becomes largest between the front frame 33 and the under frame 34, the through pipe 50 penetrating the main frame MF. Here, when linear portions of the axis C2 sandwiching the second curved portion A2 are focused, the bending angle of the second curved portion A2 is an acute angle smaller than 90 degrees.

As described above, with respect to the pipe frame strengthening structure related to the present invention, the through pipes 50 are arranged in the curved portions of the pipe material configuring the main fame MF and the like, the through pipe 50 penetrating the pipe material in the radial direction, thereby the cross-sectional shape of the pipe material becomes hardly deformable when a bending stress is applied to the pipe material, and the strength against the bending stress can be increased. Thus, since the rigidity of the pipe material is increased by a simple structure of arranging the through pipe 50, the production man-hour and the production cost can be reduced without using a gusset and patch for exclusive use. Further, the degree of freedom of the layout of the body frame can be improved by increase of the rigidity of the curved portion, and weight reduction can be also achieved by eliminating the gusset and the like.

According to the present embodiment, in the scooter type motorcycle 1, the rigidity of the main frame MF is increased by arranging the through pipe 50 of one piece or two pieces in the curved portion of the main frame MF that includes the front frame 33 and the under frame 34, the front frame 33 extending vehicle body downward from the head pipe 30, the under frame 34 largely curving vehicle body below the front frame 33 and extending vehicle rearward, the main frame MF supporting the vehicle body at a position close to the front of the body frame F. Also, since the rigidity of the main frames MF disposed by a pair in the vehicle width direction is increased, it is allowed to support the head pipe MF and the rear frame 41 on the vehicle body only by the main frame MF of the left and right and to dispose the components such as the fuel tank 70 effectively utilizing the space between the left and right main frames MF.

Further, since the rigidity of the main frame MF is increased, a reinforcement member and the like for increasing mutual rigidity becomes unnecessary between the left and right under frames 34, and thereby it is allowed to dispose the fuel tank 70 at a position close to the front of the vehicle body until the front end portion 70a (refer to FIG. 4) of the fuel tank 70 reaches vehicle body below the head pipe 30 and to increase the front wheel load of the motorcycle 1.

Further, since the rigidity of the second curved portion A2 is increased, it is allowed to directly weld the first cross pipe 35 to the front surface of the second curved portion A2, the first cross pipe 35 holding other auxiliary device group and protecting the fuel tank against the impact from the front, and thereby the number of piece of the components and the production man-hour are also reduced..

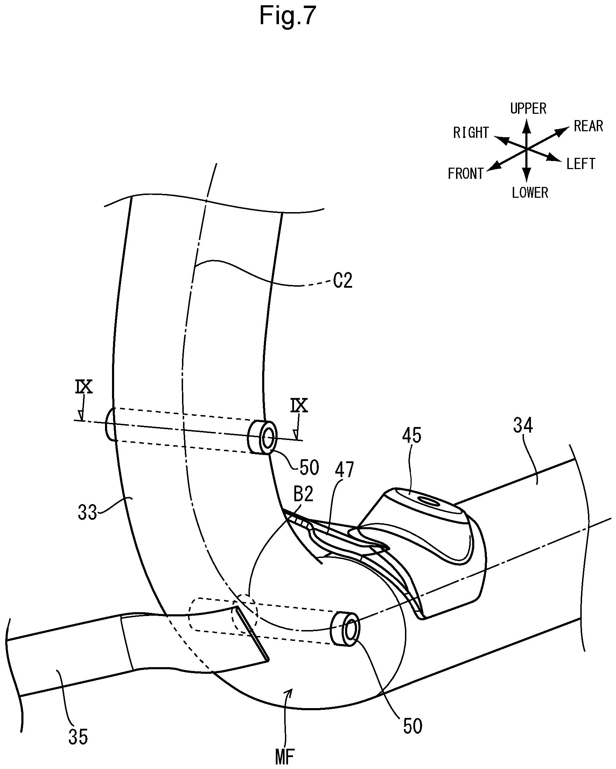

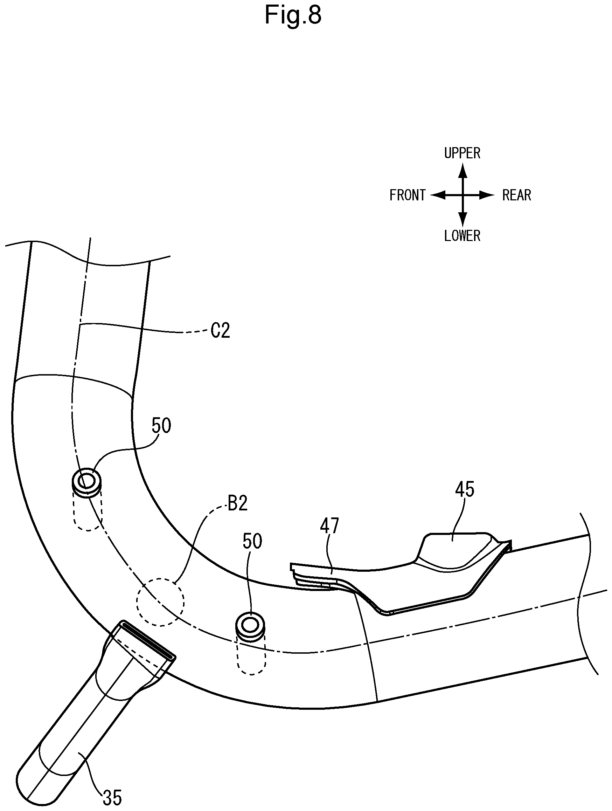

FIG. 7 is an enlarged perspective view of the second curved portion A2 between the front frame 33 and the under frame 34. Also, FIG. 8 is an enlarged side view of the second curved portion A2. The through pipes 50 of two pieces pass the axis C2 of the main frame MF, are directed to the direction orthogonal to the bending direction of the second curved portion A2, and penetrate the main frame MF. Further, in the first curved portion A1 also where the through pipe 50 of one piece is used, the point that the through pipe 50 is directed to the direction orthogonal to the bending direction of the first curved portion A1 is common.

In the second curved portion A2, since the curved portion forms an acute angle, by arranging the through pipes 50 at two positions where the curvature of the axis C2 becomes small avoiding the maximum curvature position B2 where the curvature of the axis C2 of the main frame MF becomes largest, the bending strength of the second curved portion A2 is increased. On the other hand, in the first curved portion A1, since the curved portion forms an obtuse angle, a greater bending stress is hardly applied compared to the second curved portion A2, and sufficient strength is secured by the through pipe 50 of one piece arranged at the maximum curvature position B1 where the curvature of the axis C1 becomes largest.

Conventionally, it was common that the under frame of the scooter type motorcycle curved at the front end of the front frame and was extended generally horizontally to the vehicle body rear side. In this case, the bending angle of a portion connected to the standing portion at the rear end portion of the under frame was liable to become large, and it was required to increase the bending strength by a large size gusset, sub-pipe, and the like. On the other hand, according to the main frame MF related to the present embodiment, since the rigidity is increased by the through pipe 50 and the second curved portion A2 is made to have an acute angle, the under frame 34 comes to have a shape of inclining upward to the rear, and the relative angle between the under frame 34 and the standing portion 37 becomes small. Thus, required reinforcement to be subjected between the under frame 34 and the standing portion 37 can be less, and weight reduction can be achieved also in this portion.

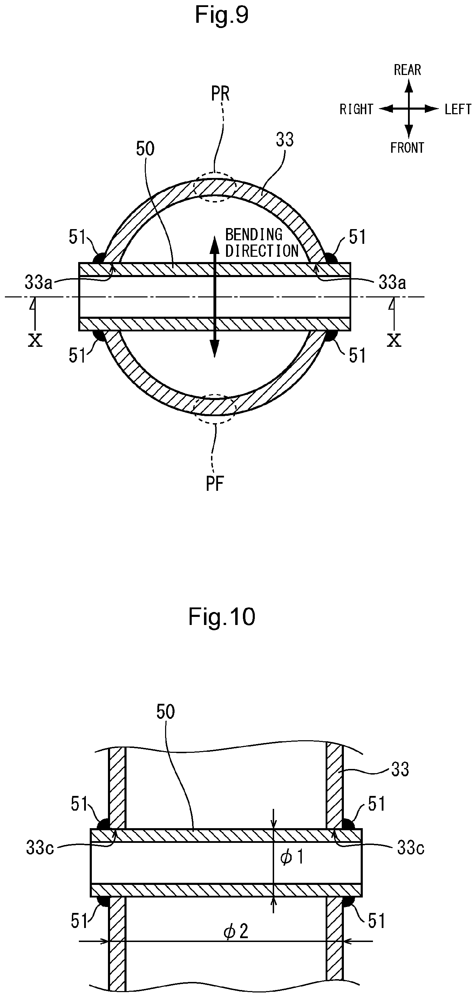

FIG. 9 is a cross-sectional view taken along the line IX-IX of FIG. 7. Also, FIG. 10 is a cross-sectional view taken along the line X-X of FIG. 9. The through pipe 50 having a circular cross section is inserted to a through hole 33c formed in the front frame 33, and is fixed to the front frame 33 by being welded from the outer side of the front frame 33. The through pipe 50 is disposed to cross the axis C1 while being extended along the radial direction of the front frame 33 in order to secure the maximum effect by the minimum length.

A weld bead 51 is arranged around the outer periphery of the through pipe 50. Thus, the joining strength can be increased compared to the case spot-like welding is executed at several positions, and the water and the like can be prevented from entering the inside of the pipe from a gap between the through hole 33c and the through pipe 50.

Here, the reason the bending strength of the pipe material increases by the through pipe 50 is that the cross-sectional shape of the pipe material comes to be hardly deformable when a bending stress is applied. Accordingly, the through pipe 50 has an effect of increasing the bending strength even when the through pipe 50 is directed to any radial direction of the pipe material, however, the strength comes to be increased more in particular when the through pipe 50 is directed to the direction orthogonal to the bending direction compared to a case the through pipe 50 is arranged along the bending direction.

Explanation will be made exemplifying the second curved portion A2. When a bending stress along the bending direction of the second curved portion A2 is applied, the pipe wall surfaces in the vehicle longitudinal direction are to come closer to each other, and the cross-sectional shape of the pipe material is to be deformed into an ellipse. At this time, a compression stress is applied to a pipe wall surface PR on the vehicle body rear side that becomes the inner side of the bending direction out of two surfaces opposing each other across the axis C2, and a tensile stress is applied to a pipe wall surface PF on the vehicle body front side that becomes the outer side of the bending direction to induce to make the thickness thin. In this regard, by fixing the through pipe 50 at a position farthest from the surface to which the tensile stress is applied namely in the direction orthogonal to the bending direction as done in the present embodiment, the strength against a bending stress comes to be increased further.

Also, the diameter ϕ1 of the through pipe 50 is set to the dimension of 1/3 to 1/4 of the diameter ϕ2 of the main frame MF. Thus, by making the diameter of the through pipe 50 comparatively small, the impact the bending stress applied to the pipe material exerted to the welded portion can be reduced, the through pipe 50 can be fixed to the pipe material with less welding work, and therefore the production man-hour can be reduced.

Also, the form of the body frame, the shape and thickness of the pipe material where the through pipe is arranged, the size and thickness of the through pipe, the fixing method and the fixing position of the through pipe, the welding mode for the through pipe, and so on are not to be limited to the embodiment described above, and various alterations are possible. For example, the cross-sectional shape of the through pipe may be a polygonal cross section other than a circular cross section. Also, in the embodiment described above, such example was exhibited that the through pipe was arranged at the maximum curvature position when the curved portion formed an obtuse angle whereas the through pipes were arranged at two positions across the maximum curvature position when the curved portion formed an acute angle, however various alterations are possible with respect to the position and the number of piece for arranging the through pipe namely the through pipes are arranged at two positions across the maximum curvature position when the curved portion forms an obtuse angle, the through pipes are arranged at three positions in total including the through pipe arranged at the maximum curvature position, and so on. The pipe frame strengthening structure related to the present invention is not to be limited to a steel pipe having a circular cross section, and can be applied to a steel pipe having various cross-sectional shapes as well as a pipe frame formed of various kinds of metal such as aluminum.

A pipe frame strengthening structure applied to a pipe material MF having a circular cross section configuring a body frame F is provided. A through pipe 50 is arranged at a curved portion of the pipe material MF. The through pipe 50 penetrates the pipe material MF in the radial direction.

The pipe material MF may include a curved portion A1, and the through pipe 50 may be arranged at a maximum curvature position B1 where curvature becomes largest in the curved portion A1.

The pipe material MF may include a curved portion A2. The through pipes 50 may be arranged at two positions apart from each other across a maximum curvature position B2 where curvature of the curved portion A2 becomes largest.

The through pipe 50 may be arranged to be directed to a direction orthogonal to the bending direction of the curved portion A1, A2.

The through pipe 50 may be arranged to cross an axis C1, C2 of the pipe material MF.

The diameter ϕ1 of the through pipe 50 may be set to be 1/3 to 1/4 of the diameter ϕ2 of the pipe material MF. The through pipe 50 may be made to pass through a through hole 33c formed in the pipe material MF and may thereafter be fixed by welding.

The body frame F may include a head pipe 30 and a main frame MF. The head pipe 30 may pivotally support a steering mechanism of a front wheel WF of a saddle riding vehicle 1 in a swingable manner. The main frame MF may extend vehicle body downward from the head pipe 30 and thereafter may extend vehicle body rearward. The through pipe 50 may be arranged in the curved portion A1, A2 that may be formed in the main frame MF.

The main frame MF may be arranged by a pair in the left and right in the vehicle width direction.

The saddle riding vehicle 1 may be a scooter type motorcycle where a low floor 11 may be arranged between a steering handlebar 5 and a seat 13. A fuel tank 70 may be disposed between a pair of left and right under frames 34 that may configure a part of the main frame MF and may be directed in the vehicle longitudinal direction. A front end portion 70a of the fuel tank 70 may be positioned vehicle body below the head pipe 30.

A curved portion A2 may be formed in the main frame MF that extends downward from the head pipe 30. The curved portion A2 may curve vehicle body rearward on the vehicle body lower side and continue to the under frame 34. A cross pipe 35 may be welded at a position between the through pipes 50 of two positions arranged in the curved portion A2. The cross pipe 35 may extend vehicle body forward and connect the left and right main frames MF to each other.

### [Reference Signs List]

1... motorcycle (saddle-type vehicle), 5... steering handlebar, 11... low floor, 13...seat, 30...head pipe, F...body frame, MF...main frame (pipe material), 33...front frame (pipe material), 33a...upper portion, 33b...lower portion, 33c... through hole, 34... under frame (pipe material), 35...first cross pipe (cross pipe), 50...through pipe, 70...fuel tank, 70a...front end portion of fuel tank, A1...first curved portion (curved portion), A2... second curved portion (curved portion), B1, B2... maximum curvature position, C1, C2... axis, ϕ1... diameter of through pipe, ϕ2...diameter of pipe material, WF...front wheel

## Claims

1. A pipe frame strengthening structure applied to a pipe material (MF) having a circular cross section configuring a body frame (F), wherein
the pipe material (MF) includes a curved portion (A2),
at least two through pipes (50) are arranged at the curved portion (A2) of the pipe material (MF), the through pipes (50) each penetrating the pipe material (MF) in the radial direction,
the through pipes (50) are arranged at two positions apart from each other across a maximum curvature position (B2) where curvature of the curved portion (A2) becomes largest,
the body frame (F) includes a head pipe (30) and a main frame (MF) extending vehicle body downward from the head pipe (30) and thereafter extending vehicle body rearward, wherein
the main frame (MF) is configured to include a front frame (33) and an under frame (34), with the under frame (34) extending vehicle body upward to the rear from the lower portion of the front frame (33), and
the through pipes (50) are arranged in the curved portion (A2) that is formed in the main frame (MF).

2. The pipe frame strengthening structure according to claim 1, wherein
the pipe material (MF) includes another curved portion (A1), and
another one of the through pipes (50) is arranged at a maximum curvature position (B1) where curvature becomes largest in the other curved portion (A1).

3. The pipe frame strengthening structure according to claim 2, wherein
in the front frame (33), the other curved portion (A1) is arranged, the other curved portion (A1) is formed by bending work between an upper portion (33a) and a lower portion (33b), and
the upper portion (33a) extending vehicle body downward to the rear from below a center pipe (31), the lower portion (33b) continuing to the lower portion of the upper portion (33a) and extending vehicle body downward to the front.

4. The pipe frame strengthening structure according to claim 3, wherein
the center pipe (31) is welded to the rear surface of the head pipe (30), and
the center pipe (31) extends downward to the rear.

5. The pipe frame strengthening structure according to claim 3 or 4, wherein
the front frame (33) extends vehicle body downward to the front from the lower portion of the center pipe (31).

6. The pipe frame strengthening structure according to any one of claims 1 to 5, wherein
the through pipes (50) are arranged to be directed to a direction orthogonal to the bending direction of the respective curved portion (A1, A2).

7. The pipe frame strengthening structure according to any one of claims 1 to 6, wherein
each of the through pipes (50) is arranged to cross an axis (C1, C2) of the pipe material (MF).

8. The pipe frame strengthening structure according to any one of claims 1 to 7, wherein
a diameter (ϕ1) of the through pipe (50) is set to be 1/3 to 1/4 of a diameter (ϕ2) of the pipe material (MF), and
the through pipe (50) is made to pass through a through hole (33c) formed in the pipe material (MF) and is thereafter fixed by welding.

9. The pipe frame strengthening structure according to any one of claims 1 to 8, wherein
the head pipe (30) pivotally supporting a steering mechanism of a front wheel (WF) of a saddle riding vehicle (1) in a swingable manner.

10. The pipe frame strengthening structure according to claim 9, wherein
the main frame (MF) is arranged by a pair in the left and right in the vehicle width direction.

11. The pipe frame strengthening structure according to any one of claims 3 to 5 and claim 10, wherein
the pair of left and right main frames (MF) are welded to both sides in the vehicle width direction of the center pipe (31).

12. The pipe frame strengthening structure according to claim 10 or 11, wherein
the saddle riding vehicle (1) is a scooter type motorcycle where a low floor (11) is arranged between a steering handlebar (5) and a seat (13),
a fuel tank (70) is disposed between a pair of the left and right under frames (34) that configure a part of the main frame (MF) and are directed in the vehicle longitudinal direction, and
a front end portion (70a) of the fuel tank (70) is positioned vehicle body below the head pipe (30).

13. The pipe frame strengthening structure according to claim 12, wherein
the curved portion (A2) is formed in the main frame (MF) that extends downward from the head pipe (30), the curved portion (A2) curving vehicle body rearward on the vehicle body lower side and continuing to the under frame (34), and
a cross pipe (35) is welded at a position between the through pipes (50) of two positions arranged in the curved portion (A2), the cross pipe (35) being extended vehicle body forward and connecting the left and right main frames (MF) to each other.

14. The pipe frame strengthening structure according to any one of claims 1 to 13, wherein
the main frame (MF) is configured to include the front frame (33) and the under frame (34) by subjecting the pipe material (MF) to plural bending works.

15. The pipe frame strengthening structure according to any one of claims 1 to 14, wherein
the front frame (33) is joined to the rear surface of the head pipe (30) and extends generally vehicle body downward, thereafter curving at a steep angle to the vehicle body rear side, and continuing to the under frame (34).
